# EUROPÄISCHE PATENTSCHRIFT

(11) **EP 0 967 400 B1**
(45) Veröffentlichungstag und Bekanntmachung des Hinweises auf die Patenterteilung: **18.02.2004**
(21) Anmeldenummer: 98122634.3
(22) Anmeldetag: 27.11.1998
(51) Int. Cl.: F15B 21/08, B29C 45/76, G05D 27/02, F15B 11/028, B29C 45/77, G05B 19/418, F04B 49/06, F04B 49/08

(54) **Regelanordnung für ein hydraulisches System**
Control device for a hydraulic system
Dispositif de régulation pour un système hydraulique

(30) Priorität: 27.06.1998 DE 19828752
(43) Veröffentlichungstag der Anmeldung: 29.12.1999
(73) Patentinhaber: ROBERT BOSCH GMBH, 70442 Stuttgart (DE)
(72) Erfinder: Pfuhl, Berthold, 71706 Markgroeningen (DE); Leutner, Volkmar, 71292 Friolzheim (DE); Mueller, Ulrich, 71364 Winnenden (DE); Clauss, Michael, 71686 Remseck (DE); Faller, Markus, 71665 Vaihingen (DE)

(56) Entgegenhaltungen:
- DE-A- 4 334 980
- DE-C- 4 409 823
- US-A- 5 182 716
- US-A- 5 371 859

## Beschreibung

Die Erfindung betrifft eine Regelanordnung für ein hydraulisches System nach der Gattung des Hauptanspruchs.

Eine derartige Regelanordnung ist aus der US-A-5 182 716 bekannt. Diese Regelanordnung regelt den Druck und den Volumenstrom der Hydraulikflüssigkeit in einem hydraulischen System, das ein Bestandteil einer Spritzgießmaschine ist. Der Istwert des Drucks der Hydraulikflüssigkeit und des Drucks in einer Spritzgießform sowie der Istwert der Position des Kolbens eines Zylinders sind in dem hydraulischen System durch entsprechende Sensoren erfaßt. Die Istwerte und ihre Sollwerte sind über ein digitales mikroprozessorgesteuertes Bussystem in der'Regelanordnung verarbeitbar. In der US-A-5 182 716 dient die Regelanordnung nur zur Optimierung der Steuerung eines in mehreren Phasen erfolgenden Spritzgießvorgangs. Die Optimierung der Steuerung erfolgt durch Vergleich der Ergebnisse von Steuerung und Regelung. Nach dem Abschluß der Optimierung der Parameter der Steuerung wird die Regelung abgeschaltet und die weiteren Spritzgießvorgänge werden nur noch gesteuert betrieben. Zusätzliche Maßnahmen für einen ereignisgesteuerten Übergang von einer Phase auf eine folgende Phase des Spritzgießvorgangs sind nicht angegeben.

Aus der DE-A-44 09 823 ist ein Regelantrieb für mehrere elektromotorisch angetriebene Achsen von Maschinen, insbesondere von Spritzgießmaschinen, bekannt. Der Regelantrieb weist eine Steuer- und Regelvorrichtung mit internen Signalrechnern für die Funktionen Phasenwinkelverstellung, Stromregelung und Geschwindigkeitsregelung auf. Außerdem besitzt der Regelantrieb eine Schnittstelle zu einem Datenbus. Über den Datenbus sind dem Regelantrieb Sollwerte zugeführt, die in dem Speicher eines Maschinenrechners abgelegt sind. Die Übertragungsgeschwindigkeit des Datenbus ist nicht so groß wie die Geschwindigkeit, mit der die Daten innerhalb der Steuer- und Regelvorrichtung mit den internen Signalrechnern verarbeitet werden. Besondere Maßnahmen für einen ereignisgesteuerten Übergang von einer Phase auf eine folgende Phase des Spritzgießvorgangs sind nicht angegeben.

Weiterhin ist aus der DE-A-44 10 719 eine Regelanordnung bekannt, bei der insbesondere der Druck und andere Größen in einer hydraulischen Vorrichtung, hier ein Verstellorgan für eine Pumpe, gemessen und durch Vorgaben der Regelanordnung beeinflusst werden. Diese Beeinflussung erfolgt in an sich bekannter Weise mit einem der hydraulischen Vorrichtung vorgeschalteten Regelventil, dessen Ventilschieber beispielsweise elektromagnetisch verstellt wird.

Aus dem Fachaufsatz "Fluidtechnische Antriebe mit digitalem Signalkreis in der Zeitschrift "Ölhydraulik und Pneumatik", Wüsthoff, 37(1993)Nr.4, Seiten 250-260 ist darüber hinaus bekannt, dass die Ein- und Ausgabeelemente einer Regelanordnung mikroprozessorgesteuert über einen Feldbus mit der zentralen Signalverarbeitung verbunden sind.

Der Erfindung liegt die Aufgabe zugrunde, eine Regelanordnung der eingangs genannten Art, bei der die Sollwerte einem Regler über ein Bussystem in Zeitabständen zugeführt sind, die länger als ein Takt des Reglers sind, so auszugestalten, dass bei einem ereignisgesteuerten Übergang zwischen zwei Phasen eines Verarbeitungsablaufs, der zwischen zwei Übergabezeitpunkten für den Sollwert erfolgt, eine Verbesserung des Regelergebnisses erreicht wird.

Diese Aufgabe wird durch die im Anspruch 1 gekennzeichneten Merkmale gelöst. Die Erfindung ermöglicht es, dem Regler bei einem ereignisgesteuerten Übergang zwischen zwei Phasen eines Verarbeitungsablaufs, der zwischen zwei Übergabezeitpunkten für den Sollwert erfolgt, dem Regler den für die neue Phase maßgebenden Sollwert bereits vor dem nächsten übergabezeitpunkt zuzuführen.

Vorteilhafte Weiterbildungen der Erfindung sind in den Unteransprüchen gekennzeichnet. Sie betreffen die Form des Übergangs der Sollwerte, der sprungförmig oder in einer anderen Form erfolgen kann. Weitere Unteransprüche betreffen die Ausgestaltung der Umschalteinrichtung für den Drucksollwert. Die Überwachungseinrichtung kann beispielsweise On-Line durch den Bus-Anschluss ein- oder ausgeschaltet werden. Die Umschalteinrichtung bildet in besonders vorteilhafter Weise einen gewichteten Druckgradienten. Aus dem Istwertsignal des Druckes wird gemäß einer Ausführungsform mit einem Differenzierer und einem nachgeschalteten Verstärker der mit dem Faktor gewichtete Druckgradient gebildet. In einem anschließenden Addierer wird dieses Signal zu dem Druck-Istwert addiert. Ein nachgeschalteter Komparator vergleicht dieses Signal mit einem Schwellwert. Bei Überschreitung des Schwellwertes wird der Sollwert des Druckes mittels eines Umschalters von einem Wert auf einen neuen Wert umgeschaltet.

Bei einer vorteilhaften Ausführungsform ist die Umschalteinrichtung derart ausgebildet, dass bei Empfang eines Triggersignales eine Umschaltung vom aktuellen auf einen voreingestellten Sollwert für Druck und/oder Volumenstrom innerhalb eines Reglertaktes bewirkt wird. Der Übergang der Sollwerte kann auch hier sprungförmig oder in einer anderen Form erfolgen. Das Triggersignal wird dabei von Sensoren außerhalb der Regeleinrichtung aus Meßgrößen durch Vergleich mit einem Schwellwert erzeugt und'an die Regeleinrichtung geleitet.

Die Sensoren dieser Ausführungsform sind dabei Busteilnehmer und erzeugen ein Triggersignal in Form einer Information die mittels Busprotokoll direkt über das Bussystem an die Regeleinrichtung gesendet wird. Der zuvor genannte Schwellwert wird mittels des Busprotokolls vor Beginn der Regelung an die Sensoren übertragen. In vorteilhafter Weise erzeugen die Sensoren das Triggersignal als binäres Signal, das mit seiner Schaltflanke im Mikroprozessor in der Regeleinrichtung unmittelbar die Umschaltung auslöst.

Ausführungsbeispiele der erfindungsgemäßen Regelanordnung werden anhand der Zeichnungen erläutert. Es zeigen:
- Figur 1: eine Prinzipdarstellung einer Regelanordnung für ein hydraulisches System nach dem Stand der Technik;
- Figur 2: eine mit einer Radialkolbenpumpe erweiterten Ausführungsform nach Figur 1;
- Figur 3: ein Blockschaltbild einer Regeleinrichtung, die Bestandteil der Regelanordnung nach Figur 1 oder Figur 2 ist;
- Figur 4: einen Verlauf der Druck- und Volumenstromwerte in der Regelanordnung bei einer Umschaltung des Drucksollwertes;
- Figur 5: ein Blockschaltbild einer Umschalteinrichtung, die Bestandteil der Regeleinrichtung nach Figur 3 ist;
- Figur 6: ein gegenüber der Darstellung nach Figur 4 ergänzter Verlauf der Druck- und Volumenstromwerte in der Regelanordnung bei einer Umschaltung des Drucksollwertes;
- Figur 7: eine Ausführungsform einer Regeleinrichtung mit externen Sensoren für die Druckwerte sowie die Zylinderpositionen des Antriebs und
- Figur 8: Flussdiagramme der Signalverarbeitung in der Regeleinrichtung bei der Umschaltung der Drucksollwerte.

### Beschreibung der Ausführungsbeispiele

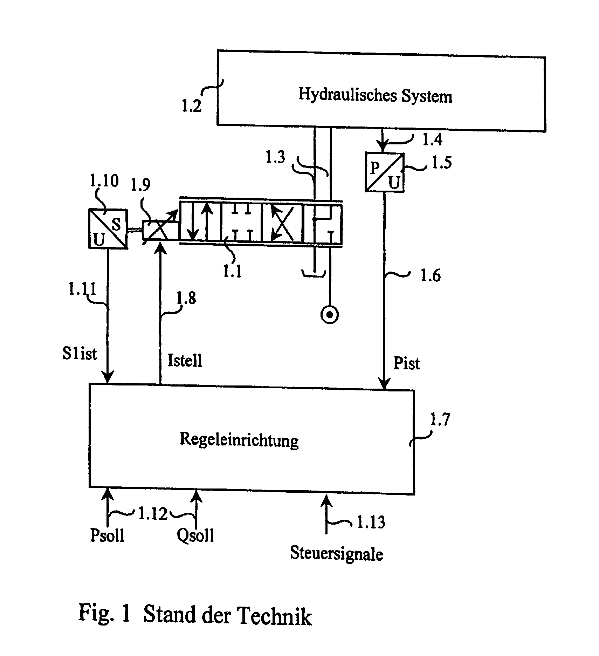

Bei einem an sich aus dem Stand der Technik bekannten Ausführungsbeispiel nach Figur 1 ist eine Regelanordnung gezeigt, die beispielsweise zur Regelung eines hydraulischen Stellzylinders für einen Spritzzylinder in einer Kunststoff-Spritzgießmaschine eingesetzt werden kann. Um eine hohe Qualität des produzierten Spritzgießteils zu gewährleisten muss insbesondere die Einspritzgeschwindigkeit des flüssigen Kunststoffs, der Nachdruck und der Staudruck während des Gießprozesses auch bei teilweise Erkalten der Gießmasse geregelt werden.

In der Figur 1 ist ein Wegeventil 1.1 in den Volumenstrom der Hydraulikflüssigkeit für ein hydraulisches System 1.2, beispielsweise ausgeführt wie oben beschrieben, eingefügt und versorgt dieses System 1.2 mit veränderlichem Volumen der Hydraulikflüssigkeit über zwei Leitungen 1.3. Im Allgemeinen handelt es sich bei dem hydraulischen System um einen Antrieb für ein Stellglied. Im Antrieb wird ein Druck 1.4 gemessen, der sich hinter dem Ventil 1.1 an geeigneter Stelle einstellt. Der gemessene Druck wird nach einem P/U-Wandler 1.5 zum Eingangssignal Pᵢₛₜ bzw. 1.6 für eine Regeleinrichtung 1.7.

Als Ausgangsgröße der Regeleinrichtung 1.7 wird ein veränderlicher Strom Iₛₜₑₗₗ über eine Leitung 1.8 zu einem Elektromagneten 1.9 geführt, mit dem die Stellung eines Ventilschiebers für das Wegeventil 1.1 verändert wird und somit den Regelkreis zur Druckregelung schließt. In einem unterlagerten Regelkreis wird die Lage dieses Ventilschiebers geregelt, indem die Lage des Ventilschiebers gemessen, über einen S/U-Wandler 1.10 zu einem weiteren Eingangssignal S1ᵢₛₜ wird und über eine Leitung 1.11 der Regeleinrichtung 1.7 zugeführt wird. Gleichzeitig wird hier zur Druckregelung im hydraulischen System 1.2 der Volumenstrom des Ventils 1.1 auf einen vorgegebenen Wert begrenzt. Die Regeleinrichtung 1.7 erhält dazu Sollwerte für Druck Pₛₒₗₗ und den Volumenstrom Qₛₒₗₗ der Hydraulikflüssigkeit über Leitungen 1.12 sowie weitere Steuersignale 1.13 für verschiedene Betriebszustände der Regeleinrichtung.

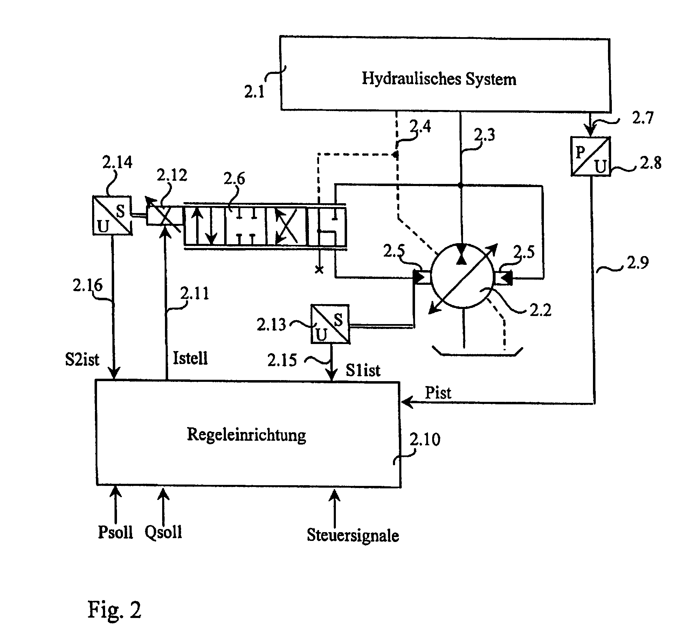

Bei einem zweiten Ausführungsbeispiel nach Figur 2 wird ein hydraulisches System 2.1 mit einem vergleichbar zur Ausführungsform nach der Figur 1 ausgeführtem Antrieb von einer Verstellpumpe 2.2 über den Anschluß 2.3 mit der Hydraulikflüssigkeit versorgt. Die Verstellpumpe 2.2 kann beispielsweise eine Radialkolbenpumpe sein, wie sie in dem eingangs erwähnten Stand der Technik DE 44 10 719 A1 beschrieben ist. In einem Rücklauf 2.4 befindet sich hier noch ein Leckölanschluss. Die Förderleistung der Pumpe 2.2 wird mittels eines Verstellkolbens 2.5 von einem Regelventil 2.6 verändert. Im hydraulischen System 2.1 wird an geeigneter Stelle der Versorgungsdruck 2.7 gemessen und nach Wandlung mit einem P/U-Wandler 2.8 als Eingangssignal Pᵢₛₜ über 2.9 der Regeleinrichtung 2.10 zugeführt.

Die Ausgangsgröße dieser Regeleinrichtung 2.10 ist ein veränderlicher Strom Iₛₜₑₗₗ, der über 2.11 mittels eines Elektromagneten 2.12 die Lage des Ventilschiebers im Ventil 2.6 einstellt und über die hydraulischen Leitungen zu dem Verstellkolben 2.5 der Pumpe 2.2 den Regelkreis schließt. Die Lage der Verstellung des Verstellkolbens 2.5 in der Pumpe 2.2 und des Ventilschiebers im Ventil 2.6 werden gemessen und über S/U-Wandler 2.13 und 2.14 zur Regeleinrichtung 2.10 zurückgeführt. Sie stellen dabei weitere Eingangssignale S1ᵢₛₜ über 2.15 und S2ᵢₛₜ über 2.16 der Regeleinrichtung 2.10 zur Verfügung.

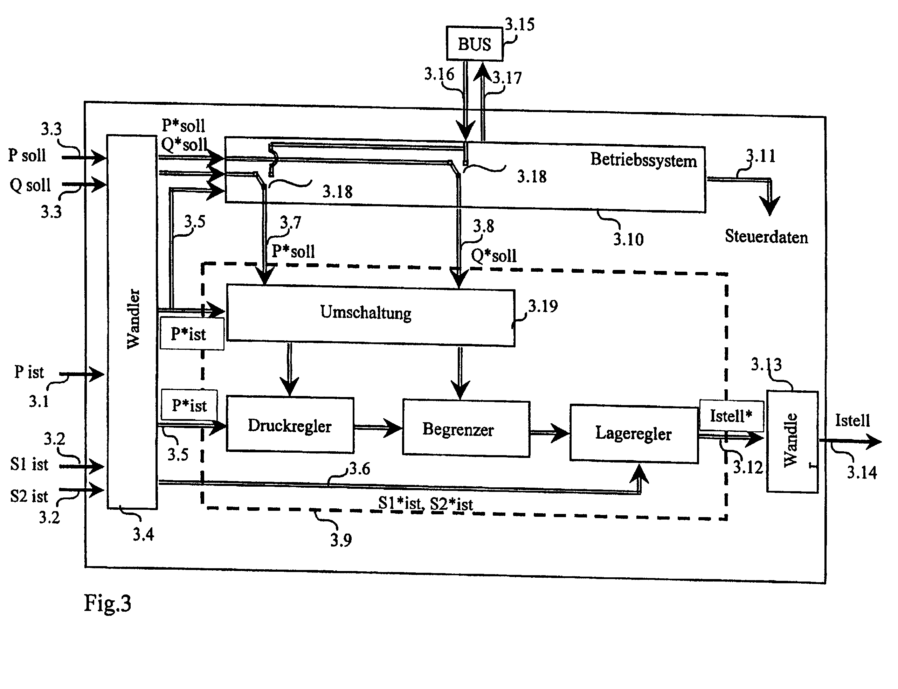

In Figur 3 ist ein Blockschaltbild einer Regeleinrichtung gezeigt, wie sie als Regeleinrichtung 1.7 nach der Figur 1 oder 2.10 nach der Figur 2 ausgeführt sein kann. Für sich gesehen ist bekannt, dass Regeleinrichtungen, wie eingangs erwähnt, mit einem oder mehreren Mikroprozessoren ausgerüstet sein können, die die Signalverarbeitung und Regelung in Funktionsmodulen mit einem vorgegebenen Rechenprogramm ausführen.

Im Falle von analogen Eingangssignalen der Regeleinrichtung nach der Figur 3, nämlich der gemessenen Istwerte für den Druck Pᵢₛₜ am Eingang 3.1, der Lage S1ᵢₛₜ des Ventilschiebers bzw. S2ᵢₛₜ des Verstellkolbens am Eingang 3.2 und der Sollwerte für den Druck Pₛₒₗₗ und das Volumen Qₛₒₗₗ am Eingang 3.3 sind diese Signale durch entsprechende Wandler 3.4 in eine für den Mikrorechner verarbeitbare digitale Form zu bringen und als Signale 3.5, 3.6, 3.7 und 3.8 den Funktionsmodulen im gestrichelt gezeichneten Schaltkreis 3.9 zur Verfügung zu stellen.

Die Steuerung der Funktionsmodule im Schaltkreis 3.9 nach der Figur 3 übernimmt dabei ein an sich bekanntes Echtzeitbetriebssystem 3.10 der Mikroprozessoren, welches die erforderlichen Steuerdaten 3.11 an alle Funktionsmodule übermittelt. Insbesondere steuert das Betriebssystem den Zeittakt für die zyklische Berechnung eines digitalen Ausgangssignals I*ₛₜₑₗₗ am Punkt 3.12 aus den Eingangssignalen an 3.1 bis 3.3 im Regelungstakt. Das digitale Ausgangssignal wird durch einen entsprechenden Wandler 3.13 in einen geeigneten Strom I*ₛₜₑₗₗ 3.14 zur Verstellung des Magneten 1.9 nach dem Ausführungsbeispiel nach der Figur 1 oder des Magneten 2.12 nach dem Ausführungsbeispiel nach der Figur 2 gebracht.

Weiterhin ist in der Figur 3 ein ebenfalls für sich gesehen bekanntes Bussystem 3.15 zur Daten- bzw. Signalübertragung von und zu den hier nicht dargestellten Mikroprozessoren schematisch dargestellt. Im Falle eines On-Line-Betriebs der Regeleinrichtung am Bussystem ist es möglich, die Eingangssignale anstelle der Wandlung analog/digital direkt in digitaler Form durch das Bussystem zur Regeleinrichtung zu übertragen. Die digitalen Signale 3.5 bis 3.8 werden ersetzt durch die vom Eingangskanal 3.16 des Bussystem übertragenen Daten. In diesem Fall entfallen die analoge Eingangssignale 3.1 bis 3.3 und der Wandler 3.4. Die Umwandlung der gemessenen Signale erfolgt dann außerhalb der Regeleinrichtung. Die Benutzung eines Bussystems bringt hierbei Vorteile unter anderem in der vereinfachten Installationstechnik.

Die an sich bekannten, hier verwendbaren, eingangs erwähnten Feldbussysteme erreichen dabei in der Regel für hydraulische Druckregelungen nicht die hohe Übertragungsgeschwindigkeit um die gemessenen Istwerte im erforderlichen Reglertakt zu übertragen. Daher werden bei den dargestellten Ausführungsbeispielen die zeitkritischen Signale Pᵢₛₜ, S1ᵢₛₜ, S2ᵢₛₜ an den Eingängen 3.1, 3.2 analog über den Wandler und die zeitunkritische Signale P*ₛₒₗₗ und Q*ₛₒₗₗ an den Verbindungen 3.7, 3.8 sowie die Steuerdaten 3.11 des Betriebssystems 3.10 digital über den Eingangskanal 3.16, d.h. mittels des Bussystems 3.15 übertragen.

Die innerhalb der Regeleinrichtung nach der Figur 3 vorliegenden digitalen Istwerte P*ᵢₛₜ an 3.5 können vom Betriebssystem 3.10 über den Ausgangskanal 3.17 des Bussystems 3.15 zu einer übergeordneten Steuerung übertragen werden. Wenn der Betrieb dieser Regeleinrichtung alternativ mit analogen oder digitalen Eingangssignalen stattfinden soll, ist es möglich, dass das Betriebssystem 3.10 die Signalpfade mit einer geeigneten Einrichtung 3.18 umschaltet.

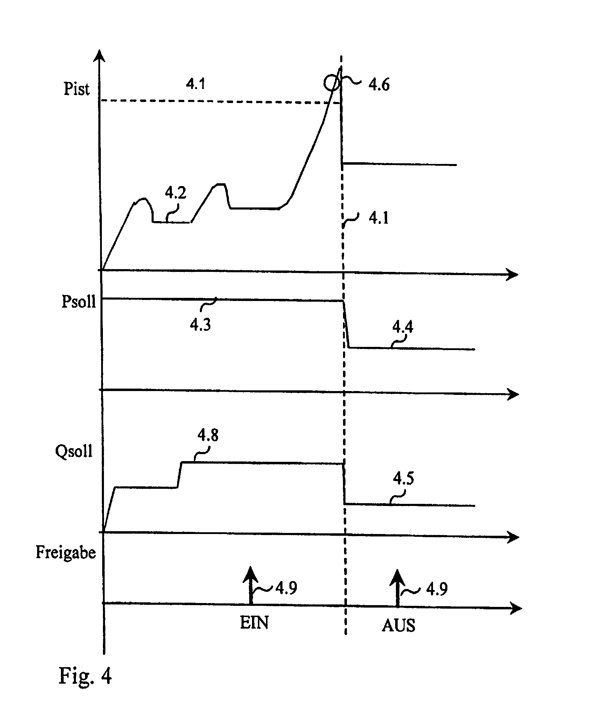

Bei hydraulischen Systemen ist es in vielen Fällen notwendig, den Drucksollwert mit hoher Geschwindigkeit ereignisgesteuert zu verändern. Ein typischer Anwendungsfall ist der Übergang von der Einspritz- in die Nachdruckphase bei den oben erwähnten Spritzgießmaschinen. Die Signalverläufe bei diesem Vorgang sind in Figur 4 dargestellt.

Am Ende der gestrichelt gezeichneten Einspritzphase 4.1 einer solchen Spritzgießmaschine wird nach der Figur 4 abhängig vom zeitlichen Verlauf des Druckes Pᵢₛₜ im Kurvenverlauf 4.2 von einem Sollwert Pₛₒₗₗ entsprechend 4.3 auf eine Druckregelung mit einem veränderten, abgesenkten Sollwert 4.4 umgeschaltet. Gleichzeitig kann auch der Volumenstromsollwert Qₛₒₗₗ in der darunter gezeigten Kurve auf einen neuen Wert 4.5 umgeschaltet werden. Der Übergang dieser Sollwerte kann sprungförmig oder in einer anderen Übergangsform (z.B. rampenförmig) erfolgen. Der steile Druckanstieg 4.6 in der oberen Darstellung des Druckes Pᵢₛₜ erfordert dabei eine schnelle Messung und Berechnung des Umschaltzeitpunktes 4.7.

Im zeitlichen Verlauf des Druckes Pᵢₛₜ nach dem Verlauf 4.2 entstehen durch Veränderung der Sollwerte Qₛₒₗₗ im Verlauf 4.8 vor dem Ende der Einspritzphase durch den Übergang von konstanter Geschwindigkeit des Vorschubs zur Beschleunigung bei 4.1 bereits Druckspitzen, die zu einem vorzeitigen Auslösen der Umschaltung führen könnten. Daher kann der Umschaltvorgang durch ein zusätzliches Freigabesignal 4.9 ein- oder ausgeschaltet werden.

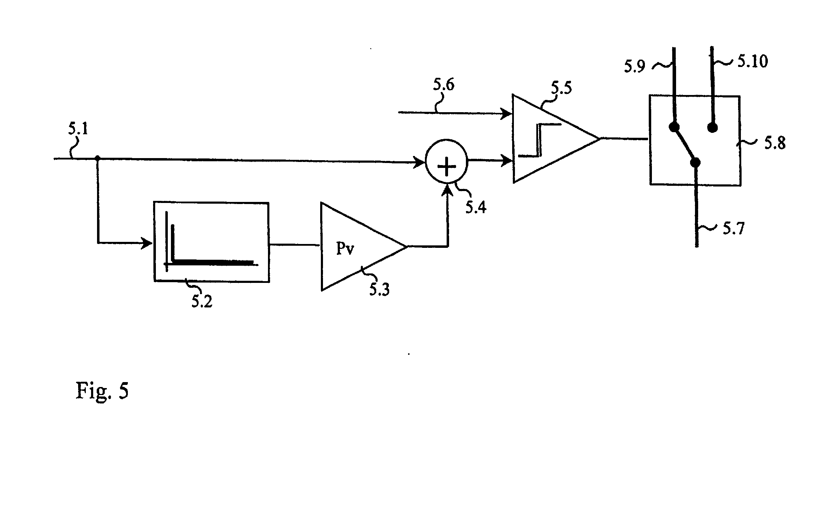

Eine Verbesserung in der Genauigkeit in der Bestimmung des zuvor beschriebenen Umschaltzeitpunktes entsteht durch Bildung eines gewichteten Druckgradienten in der besonderen Ausbildung der anhand der Figur 3 beschriebenen Umschalteinrichtung 3.19 gemäß der Ausbildung nach Figur 5. Aus dem Signal Pᵢₛₜ am Eingang 5.1 dieser Schaltung wird mit einem Differenzierer 5.2 und einem nachgeschalteten Verstärker 5.3 ein mit dem Faktor Pᵥ gewichteter Druckgradient gebildet. Im anschließenden Addierer 5.4 wird dieses Signal zu dem Druck-Istwert am Eingang 5.1 addiert. Ein nachgeschalteter Komparator 5.5 vergleicht dieses Signal mit einem Schwellwert 5.6. Bei Überschreitung des Schwellwertes wird der Sollwert des Druckes Pₛₒₗₗ 5.7 mittels eines Umschalters 5.8 vom Wert Pₐₗₜ 5.9 auf den Wert Pₙₑᵤ 5.10 umgeschaltet.

Der zeitliche Verlauf 4.2 des Druckwertes Pᵢₛₜ nach der Figur 4 entspricht dabei dem Verlauf des digitalen Signales P*ᵢₛₜ an 3.5 in der Regeleinrichtung nach der Figur 3, wobei dieser im Reglertakt aktualisiert dem tatsächlichen Wert folgt. Außerhalb der Regeleinrichtung nach der Figur 3 ist der Druck-Istwert P*ᵢₛₜ über den Ausgangskanal 3.17 für das Bussystem 3.15 verfügbar. Die vergleichsweise langsame Übertragungsgeschwindigkeit des Bussystems 3.15 erschwert jedoch die Ermittlung des genauen Umschaltzeitpunktes. Die alternative externe Messung des Druckistwertes P*ᵢₛₜ und Einstellung des Sollwertes P*ₛₒₗₗ über das Bussystem 3.15 erschwert aus dem gleichen Grund den Start des genauen Umschaltzeitpunktes.

Bei dem erfindungsgemäßen Ausführungsbeispiel nach der Figur 3 wird dieser Nachteil dadurch beseitigt, daß der aktuelle Druck-Istwert P*ᵢₛₜ an 3.5 in der Regelungseinrichtung einer Umschalteinrichtung 3.19 zugeführt wird. Bei Überschreitung eines Schwellwertes wird im selben Regelungstaktzyklus auf den neuen Drucksollwert und/oder Volumenstrom umgeschaltet. Die Steuerdaten für den Gewichtungsfaktor, den Schwellwert und die neuen Sollwerte werden vor Beginn der Einspritzphase der Spritzgießmaschine mittels des Bussytems 3.15 übertragen. Die Umschalteinrichtung 3.19 entspricht in ihrer Funktion der in der Figur 5 gezeigten Umschalteinrichtung und kann über das Bussystem 3.15 mittels hier üblicher Steuerdaten ein- oder ausgeschaltet werden.

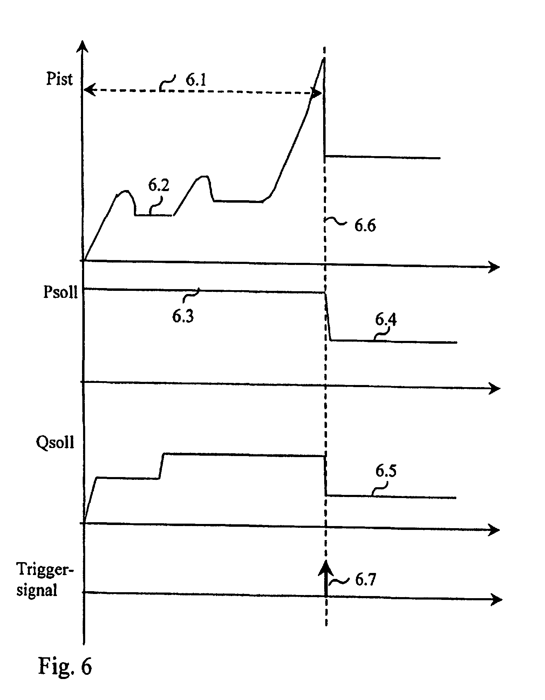

In Figur 6 ist vergleichbar zu Figur 4 ein Signalverlauf der Werte in der Regelanordnung für eine Spritzgießmaschine aufgezeichnet. Am Ende der Einspritzphase nach der gestrichelten Linie 6.1 wird von einem Sollwert Pₛₒₗₗ entsprechend 6.3 auf eine Druckregelung mit einem veränderten Sollwert Pₛₒₗₗ gemäß 6.4 umgeschaltet. Gleichzeitig kann auch hier der Volumenstromsollwert Qₛₒₗₗ auf einen neuen Wert 6.5 umgeschaltet werden. Der Übergang der Sollwerte kann wie bei Figur 4 sprungförmig oder in einer anderen Übergangsform (z.B. rampenförmig) erfolgen.

Der Zeitpunkt der Umschaltung an der gestrichelten Zeitlinie 6.6 kann am hydraulischen System durch verschiedene Meßgrößen bestimmt werden, die mittels Sensoren erfaßt und umgesetzt werden (z.B. Lage des Vorschubzylinders der Spritzgießmaschine oder des Forminnendruck in der Spritzgießform). Die Umschaltung auf die neuen Sollwerte erfolgt hier durch ein Triggersignal 6.7 an die oben beschriebene Regeleinrichtung.

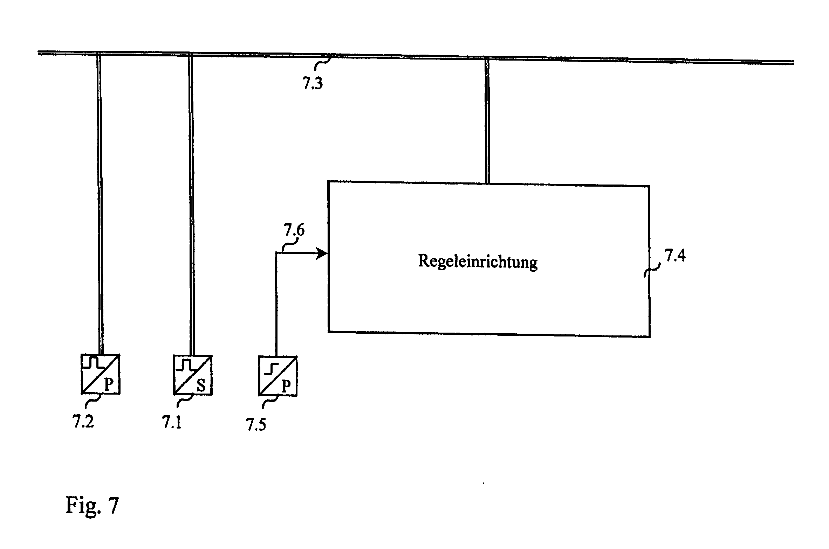

Aus Figur 7 ist eine Schaltung zur erfindungsgemäßen Erzeugung der Umschaltung zu entnehmen. Das Triggersignal 6.7 wird von den zur Messung eingesetzten Sensoren 7.1 für die Lage des Vorschubzylinders und 7.2 für den Forminnendruck oder von weiteren, hier nicht dargestellten Sensoren selbst erzeugt und direkt über ein Bussystem 7.3 an eine Regeleinrichtung 7.4 übertragen. Die übrigen Anschlüsse der Regeleinrichtung 7.4 sind hier zur Erhaltung der Übersichtlichkeit nicht gezeichnet.

Die Sensoren 7.1 und 7.2 besitzen einen Vergleicher, der die gemessenen Signale mit einem über das Bussystem 7.3 programmierten Schwellwert vergleicht. Bei Überschreitung dieses Schwellwertes senden die Sensoren ein Kontrollwort oder eine vergleichbare Information mit dem Busprotokoll an die Regeleinrichtung 7.4. Das Kontrollwort wird vor dem Beginn der Regelung zwischen den Busteilnehmern Sensor 7.1, 7.2 und Regeleinrichtung 7.4 festgelegt. Die Regeleinrichtung löst bei Empfang des Kontrollwortes unmittelbar die Umschaltung aus. Diese Anordnung der Sensoren und der Regeleinrichtung bringt wesentliche Vorteile in der Installation. Weiterhin ist keine weitere Steuerung an dem Umschaltvorgang beteiligt, wie dies bei dem Einsatz von herkömmlichen Sensoren mit analogen Ausgängen der Fall wäre. Die Vorteile dadurch sind Einsparung von Installation und Reaktionszeit.

Bei manchen Anwendungsfällen kann die Reaktionszeit des Bussystems 7.3 zwischen dem Erreichen des Schwellwertes und dem Empfang des Kontrollwortes nicht ausreichend schnell für die Umschaltung des Druckes Pₛₒₗₗ sein. Dies ist z.B. bei der Umschaltung mit dem Sensor 7.2 für den Forminnendruck möglich. In diesen Fällen wird das Triggersignal durch einen anderen Sensor 7.5 als sprungförmiges binäres Signal 7.6 unter Umgehung des Bussystems 7.3 auf die Regeleinrichtung 7.4 gegeben. Das Signal kann dabei über einen Eingangsport des Mikroprozessors in der Regeleinrichtung 7.4 unmittelbar die Druckumschaltung für Pₛₒₗₗ auslösen. Die Reaktionszeit des Bussystems 7.3 ist dadurch ausgeschaltet.

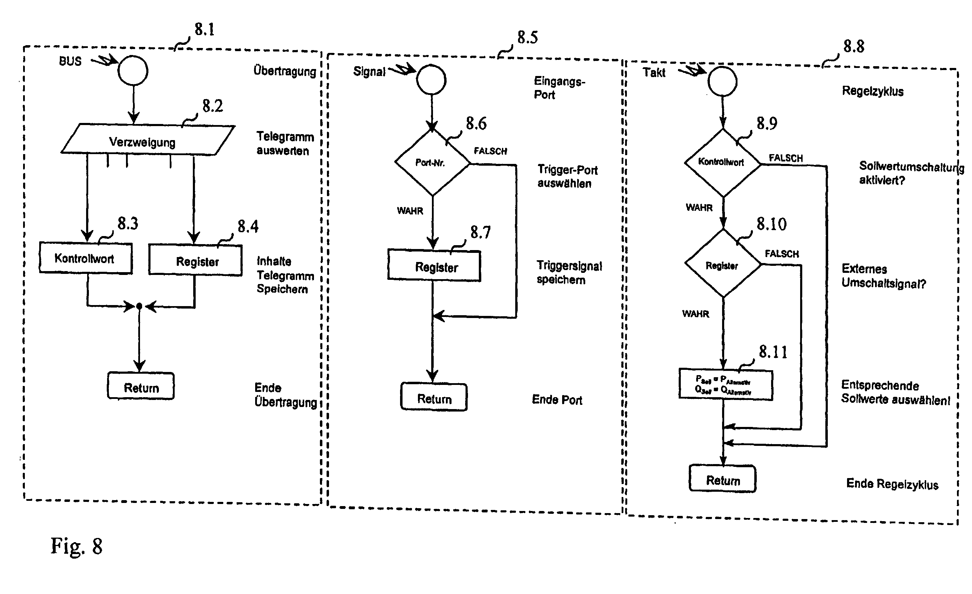

Die Behandlung der Umschaltsignale des Bussystems oder des entsprechenden Eingangsports ist in Figur 8 dargestellt, die die buskonforme Signalverarbeitung bei der Umschaltung in Form eines Flussdiagramms zeigt. Das Programm zur Steuerung des Mikrorechners in der Regeleinrichtung 7.4 arbeitet mit unabhängigen Tasks, die jeweils durch einen Interrupt aufgerufen werden. Im Flussdiagramm 8.1 ist die Busübertragung dargestellt; sie bewirkt eine Auswertung des jeweiligen Telegramms in einer Verzweigung 8.2. Die für eine Sollwertumschaltung von Pₛₒₗₗ relevanten Telegramme bewirken eine Veränderung eines Kontrollwortes im Programmteil 8.3, mit denen die Umschaltung generell ein- oder ausgeschaltet werden kann und eines Registers im Programmteil 8.4, in welchem das externe Triggersignal 6.7 gespeichert wird. Danach läuft die Taskübertragung nach dem Flussdiagramm 8.1 aus.

Alternativ kann das Triggersignal 6.7 durch die Tasks nach dem Flussdiagramm 8.5 bearbeitet werden, die den Eingangsport bearbeitet. Nach Feststellung der Portnummer in der Abfrage 8.6 wird im Zweig mit der Aussage "WAHR" das Triggersignal 6.7 im Programmteil 8.7 in dem selben Register gespeichert wie bei dem Task 8.1. Danach läuft die Task zum Ende.

Das Kontrollwort und das Register werden bei jedem Regelzyklus im Task nach dem Flussdiagramm 8.8 abgefragt, bei dem der interne Rechnertakt aufgerufen wird. Ist die Umschaltung eingeschaltet, ist die Aussage der Abfrage 8.9 "WAHR" und ist zusätzlich das Register mit dem Triggersignal 6.7 gesetzt so entscheidet die Abfrage 8.10 auf "WAHR". Dann werden im Programmteil 8.11 die Sollwerte Pₛₒₗₗ und Qₛₒₗₗ umgeschaltet. In allen "FALSCH" Entscheidungen läuft das Programm nach dem Flussdiagramm 8.8 an der zuvor beschriebenen Sollwertumschaltung vorbei. Das Triggersignal 6.7 im Register muß dann an geeigneter Stelle im Programm für die nächste Umschaltung zurückgesetzt werden.

## Patentansprüche

1. Regelanordnung für ein hydraulisches System zur Regelung des Drucks (P) und des Volumenstroms (Q) der Hydraulikflüssigkeit in dem hydraulischen System, bei der die Istwerte (Pᵢₛₜ, S1ᵢₛₜ, S2ᵢₛₜ), die im hydraulischen System durch Sensoren (2.8, 2.13, 2.14) erfasst sind, und die Sollwerte (Pₛₒₗₗ, Qₛₒₗₗ) über ein digitales, mikroprozessorgesteuertes Bussystem (3.15) in der Regelanordnung verarbeitbar sind, **dadurch gekennzeichnet,**
- **dass** der Istwert (Pᵢₛₜ) für den Druck in dem hydraulischen System und/oder aus diesem abgeleitete Größen - alternativ zur Übertragung im Bussystem (3.15) innerhalb eines Taktes des Bussystems - direkt einem Rechnerbaustein der Regelanordnung zugeführt sind,
- **dass** der Istwert (Pᵢₛₜ) für den Druck und/oder die aus diesem abgeleiteten Größen einer Umschalteinrichtung (3.19) zugeführt sind und
- **dass** die Umschalteinrichtung bei Überschreitung eines voreingestellten Schwellwertes (5.6) eine Umschaltung von dem aktuellen (4.3) auf einen voreingestellten (4.4) Sollwert für den Druck und/oder den Volumenstrom innerhalb des Reglertaktes bewirkt.

2. Regelanordnung nach Anspruch 1, **dadurch gekennzeichnet, dass** die Umschaltung sprung- oder rampenförmig erfolgt.

3. Regelanordnung nach Anspruch 1 oder 2, **dadurch gekennzeichnet,**
- **dass** die Umschalteinrichtung (3.19) einen Differenzierer (5.2) und einen nachgeschalteten Verstärker (5.3) zur Bildung eines mit einem Faktor (Pᵥ) gewichteten Druckgradienten aufweist,
- **dass** die Umschalteinrichtung einen Addierer (5.4) aufweist, der dieses Signal zu dem Istwert des Druckes addiert, und
- **dass** ein Komparator (5.5) das Ausgangssignal des Addierers mit einem Schwellwert (5.6) vergleicht, wobei bei Überschreitung des Schwellwertes eine Umschaltung des Sollwerts des Druckes auf den voreingestellten Wert (5.10) erfolgt.

4. Regelanordnung nach Anspruch 1 oder 2, **dadurch gekennzeichnet, dass** die Umschalteinrichtung (3.19) durch ein Triggersignal (6.7) gesteuert ist, wobei mit dem Triggersignal eine Umschaltung innerhalb eines Reglertaktes einer busgesteuerten Signalverarbeitung in der Regelanordnung erfolgt.

5. Regelanordnung nach Anspruch 4, **dadurch gekennzeichnet, dass** das Triggersignal (6.7) außerhalb der Regeleinrichtung (7.4) von Sensoren (7.1, 7.2) für den Druck (P) und/oder den Volumenstrom (Q) der Hydraulikflüssigkeit durch einen Vergleich mit einem Schwellwert erzeugbar ist.

6. Regelanordnung nach Anspruch 5, **dadurch gekennzeichnet, dass** die Sensoren (7.1, 7.2) Teilnehmer des Bussystems (7.3) sind und ein Triggersignal direkt über das Bussystem an die Regeleinrichtung (7.4) senden, wobei der jeweilige Schwellwert vor Beginn der Regelung direkt an die Sensoren übertragen worden ist.

7. Regelanordnung nach Anspruch 5 oder 6, **dadurch gekennzeichnet, dass** das Triggersignal ein binäres Signal (7.6) ist und dass mit seiner Schaltflanke im Mikroprozessor der Regeleinrichtung (7.4) unmittelbar die Umschaltung auslösbar ist.

8. Regelanordnung nach einem der vorhergehenden Ansprüche, **dadurch gekennzeichnet, dass** sie zur Druck- und Volumenregelung der hydraulischen Verstellung für den Spindelantrieb einer Spritzgießmaschine dient.

## Claims

1. Control device for a hydraulic system for controlling the pressure (P) and the volumetric flow (Q) of the hydraulic fluid in the hydraulic system, in which the actual values (P_{actual}, S1_{actual}, S2_{actual}), which are registered in the hydraulic system by sensors (2.8, 2.13, 2.14), and the setpoint values (Pₛₑₜ, Qₛₑₜ) can be processed by means of a digital, microprocessor-controlled bus system (3.15) in the control device, **characterized**
- **in that** - as an alternative to the transmission in the bus system (3.15) within a cycle of the bus system - the actual value (P_{actual}) for the pressure in the hydraulic system and/or variables derived from it are fed directly to a computer module of the control device,
- **in that** the actual value (P_{actual}) for the pressure and/or the variables derived from it are fed to a changeover device (3.19) and
- **in that**, when a preset threshold value (5.6) is exceeded, the changeover device brings about a changeover from the current setpoint value (4.3) to a preset setpoint value (4.4) for the pressure and/or the volumetric flow within the controller cycle.

2. Control device according to Claim 1, **characterized in that** the changeover takes place in the form of a jump or ramp.

3. Control device according to Claim 1 or 2,
**characterized**
- **in that** the changeover device (3.19) has a differentiator (5.2) and a downstream amplifier (5.3) for the forming of a pressure gradient weighted with a factor (Pᵥ),
- **in that** the changeover device has an adder (5.4), which adds this signal to the actual value of the pressure, and
- **in that** a comparator (5.5) compares the output signal of the adder with a threshold value (5.6), a changeover of the setpoint value of the pressure to the preset value (5.10) taking place when the threshold value is exceeded.

4. Control device according to Claim 1 or 2, **characterized in that** the changeover device (3.19) is controlled by a trigger signal (6.7), the trigger signal causing a changeover to take place within a controller cycle of bus-controlled signal processing in the control device.

5. Control device according to Claim 4, **characterized in that** the trigger signal (6.7) can be generated outside the control unit (7.4) by sensors (7.1, 7.2) for the pressure (P) and/or the volumetric flow (Q) of the hydraulic fluid by a comparison with a threshold value.

6. Control device according to Claim 5, **characterized in that** the sensors (7.1, 7.2) constitute part of the bus system (7.3) and send a trigger signal directly via the bus system to the control unit (7.4), the respective threshold value having being transmitted directly to the sensors before the beginning of the control.

7. Control device according to Claim 5 or 6, **characterized in that** the trigger signal is a binary signal (7.6) and **in that** the changeover can be initiated directly by the switching edge of the said signal in the microprocessor of the control unit (7.4).

8. Control device according to one of the preceding claims, **characterized in that** it serves for controlling the pressure and volume of the hydraulic adjustment for the spindle drive of an injection-moulding machine.

## Revendications

1. Dispositif de régulation conçu pour un système hydraulique afin de réguler la pression (P) et le débit (Q) du fluide hydraulique dans un système hydraulique dans lequel les valeurs réelles (P_{réel}, S1_{réel}, S2_{réel}) saisies par des capteurs (2.8, 2.13, 2.14) dans le système hydraulique ainsi que les valeurs de consigne (P_{cons}, Q_{cons}) sont traitables dans le dispositif de régulation via un système de bus (3.15) numérique commandé par un microprocesseur,
**caractérisé en ce que**
- la valeur réelle (P_{réel}) de la pression régnant dans le système hydraulique et/ou provenant de ces grandeurs dérivées - ou, en variante, servant à la transmission dans le système du bus (3.15), dans un cycle du système du bus - est amenée directement au bloc de calcul du dispositif de régulation,
- la valeur réelle (P_{réel}) de la pression et/ou de ses grandeurs dérivées est amenée à un dispositif de commutation (3.19),
- lorsqu'une valeur seuil (5.6) est dépassée, le dispositif de commutation entraîne la commutation prédéterminée de la valeur de consigne actuelle (4.3) à une valeur de consigne (4.4) prédéterminée de la pression et/ou du débit pendant le cycle du régulateur.

2. Dispositif de régulation selon la revendication 1,
**caractérisé en ce que**
la commutation se produit de manière instantanée ou de manière linéaire.

3. Dispositif de régulation selon les revendications 1 et 2,
**caractérisé en ce que**
- le dispositif de commutation (3.19) présente un différenciateur (5.2) et un amplificateur (5.3) branché en aval pour former un gradient de pression pondéré avec un facteur (Pᵥ),
- le dispositif de commutation présente un additionneur (5.4) qui additionne ce signal à la valeur réelle de la pression,
- un comparateur (5.5) compare le signal de sortie de l'additionneur à une valeur seuil (5.6), la valeur de consigne de la pression passant à la valeur préréglée (5.10) lorsque la valeur seuil est dépassée.

4. Dispositif de régulation selon les revendications 1 et 2,
**caractérisé en ce que**
le dispositif de commutation (3.19) est commandé par un signal de déclenchement (6.7), une commutation se produisant dans le dispositif de régulation, du fait du signal de déclenchement, pendant un cycle du régulateur d'un traitement du signal commandé par bus.

5. Dispositif de régulation selon la revendication 4,
**caractérisé en ce que**
le signal de déclenchement (6.7) est produit, par comparaison avec une valeur seuil, par des capteurs (7.1, 7.2) de pression (P) et/ou de débit (Q) du fluide hydraulique, en dehors du dispositif de régulation (7.4).

6. Dispositif de régulation selon la revendication 5,
**caractérisé en ce que**
les capteurs (7.1, 7.2) sont reliés au système du bus (7.3) et envoient directement un signal de déclenchement au dispositif de régulation (7.4) via le système du bus, la valeur seuil en question étant directement transmise aux capteurs avant le début de la régulation.

7. Dispositif de régulation selon les revendications 5 et 6,
**caractérisé en ce que**
le signal de déclenchement est un signal binaire (7.6) et la commutation peut être directement déclenchée dans le microprocesseur du dispositif de régulation (7.4) avec son flanc de commutation.

8. Dispositif de régulation selon l'une quelconque des revendications précédentes,
**caractérisé en ce qu'**
il sert à réguler la pression et le débit d'un système hydraulique servant à commander les broches d'une presse d'injection.
